(19) **Europäisches Patentamt**
**European Patent Office**
**Office européen des brevets**

(11) **EP 1 304 643 A1**

(12) **EUROPEAN PATENT APPLICATION**

(43) Date of publication:
**23.04.2003 Bulletin 2003/17**

(51) Int Cl.[7]: **G06F 17/60**

(21) Application number: **02425479.9**

(22) Date of filing: **24.07.2002**

| | |
|---|---|
| (84) Designated Contracting States: **AT BE BG CH CY CZ DE DK EE ES FI FR GB GR IE IT LI LU MC NL PT SE SK TR** Designated Extension States: **AL LT LV MK RO SI** | (72) Inventors: • **Grossi, Marina, c/o Finmeccanica S.p.A.** **00195 Roma (IT)** • **Sandri, Stefano, c/o Finmeccanica S.p.A.** **00195 Roma (IT)** |
| (30) Priority: **22.10.2001 IT RM20010626** | (74) Representative: **Iannone, Carlo Luigi et al** **Ing. Barzanò & Zanardo Roma S.p.A.** **Via Piemonte, 26** **00187 Roma (IT)** |
| (71) Applicant: **FINMECCANICA S.p.A.** **00195 Roma (IT)** | |

(54) **Automatic system for evaluating the economical added value of single work orders of a company and automatic method for operating the system**

(57)    This invention relates to an automatic system for evaluating the economic value added of individual orders developable by an aggregated economic entity, comprising data processing means connected to data acquiring and/or receiving means, and to display means, the acquiring and receiving means transferring the acquired and/or received economic and/or financial data to said data processing means, characterised in that said data processing means are adapted to determine, in respect of at least one order developable by an aggregated economic entity, based upon economic and/ or financial data received from said data acquiring and/ or receiving means, the Economic Value Added of a period of the order by determining an Invested Capital of the Order including a fraction of the Invested Capital of said economic entity assigned to said order according to at least one assignment rules.

The invention also relates to an automatic method for economic evaluation of individual orders acquired by an aggregated economic entity as well as to the instruments needed for performing the method by a computer.

EVA = ECONOMIC VALUE ADDED OF ON ORDER

**ECONOMIC PLAN**
+ PROCEEDS
- TOTAL EXTERNAL COST
- TOTAL INTERNAL COSTS
- DRAWINGS FROM WAREHOUSES
- TOTAL ADMINISTRATIVE COSTS
- TOTAL GENERAL COSTS ALLOTTED TO THE ORDER
-/+ OTHER BURDENS/INCOMES
**EBIT = OPERATIVE REVENVE**

**FINANCIAL STATEMENT**
+ TOTAL OPERATIVE COLLECTIONS
- TOTAL OPERATIVE DISBURSEMENTS
= CURRENT MANAGEMENT BALANCE
INVESTMENT BALANCE
+ TOTAL FINANCIAL COLLECTIONS
+ TOTAL FINANCIAL DISBURSEMENTS
= FINANCIAL MANAGEMENT BALANCE CIRCULATING CAPITAL
**PERIOD CASH FLOW**

**CIRCULATING CAPITAL**
+ CLIENTS
+ WAREHOUSES/OA
+ OTHER ACTIVITIES
- SUPPLIERS
- OTHER LIABILITIES
**FIXEX CAPITAL**
+ IMMOBILIZATIONS
- SINKING FUND
**- EWRS FUND**
**NET INVESTED CAPITAL**

**EVA = ECONOMIC VALUE ADDED**
**EBIT**
x
(1 - TAXES ON OPERATIVE OUTCOME)
**- Net Invested Capital**
(begin of period)
x WACC
**= PERIOD EVA**
EVA = Sum of up-dated period EVA'S

**WACC (Welghted Average Cost of Capital)**
+ WEIGHTED AVERANGE COST OF CAPITAL

ALL PROSPECTS ARE AT ORDER LEVEL

Fig. 1

**Description**

This invention relates to an automatic system for economic and financial evaluation of individual work orders developable by a company, in particular work orders acquired or to be acquired by a company, as well as to the related automatic method for operation of the system, which performs in simple and reliable manner an evaluation of both the preventive and the consumptive Economic Value Added of individual work orders to the company, thereby furnishing an effective management instrument to the staff personnel entrusted with the formulation and/or the management of said work orders.

This invention also relates to the instruments needed for performing the above automatic operation method of the system.

It is known that, in order to perform a correct management of a company, the staff personnel entrusted with taking decisions in respect of the activities of the company needs to have all economic and financial parameters capable to measure the effects of such decisions on the whole company available. This is necessary both at preventive and at consumptive level during the evolution of the above mentioned activities: in the first case, a preventive evaluation enables to establish whether the prosecution of a current or outstanding activity or the evolution of new activities is economically convenient for the company, in other words it enables to estimate if and to which amount an Economic Value Added is created or destroyed by evolution of the concerned activities; in the second place, it enables to establish whether the present conditions of the company permit the prosecution of the current or outstanding activities or the evolution of new activities.

An evaluation of the Economic Value Added of a company, both at preventive and at consumptive level, is also necessary in the frame of a correct management of the financial investments and of the Exchange operations, in order to define the status or conditions of a company and/or the trends of its share quotation . In fact, particularly in recent times, the value creation for the share holders has received an increasing attention by the company financial managers. New value measurement methods have been conceived in order to quantify the operative capabilities or performances on a period base in terms of value creation, assuming that such value creation is to be meant as a maximisation of the long term returns to the share holders.

The most largely utilised conventional evaluations are based upon a measurement of the performances of a company, or of a division of the company, in terms of Return on Investment, which measures the ratio between Operative Revenue and Net Invested Capital or in terms of Return on Equity or ROE, which measures the ratio between Financial Net Earning and the Equity of a period. A similar evaluation is carried out based upon the Earning per Share or EPS, which measures the ratio between the Earning after Taxes and the weighted average value of the ordinary shares at the end of the financial year.

However such conventional evaluations do not take the capital invested in the company into account. Many approaches have been proposed to eliminate this drawback.

In particular, since at least twenty years, the evaluation of the Economic Value Added of a company has been effected by comparing the yield of the invested capital of a company to a figurative market cost, namely the so-called "cost-opportunity" of the capital itself. In such an evaluation, it is assumed that the value creation is that portion of the yield of the invested capital exceeding its cost.

Therefore, an option (an activity of the company or an investment) realising a more advantageous result with respect to the minimum result expected from the market in connection with a determined investment typology will appear to be preferable to a decision taking subject (the staff personnel or an investor) obliged to make a selection among various utilisation alternatives for the invested capital.

Such an evaluation can be expressed by means of a financial mathematical formula that the U.S. citizens Stern and Stewart improved in the last decade of the XX Century by introducing some correction figures to adjust some accounting values included in the formula. Such correction figures keep into account the fact that the capability to generate or not a value cannot be correctly identified without eliminating all distortion due to practice or to any legal restraints to be intrinsically respected in forming the budgets. The stern and Stewart formula furnishes a method for calculating an economic figure designated as Economic Value Added or EVA® which just furnishes the Economic Value Added generated by a company. In particular, EVA is a Registered Trademark of Stern Stewart & Co.

In particular, the EVA is an indicator which indicates whether and to which amount the present and the future management of a company creates or destroys value to the share holders. Let the following parameters be defined: the Earning Before Interests and Taxes or EBIT representing the results calculated before any financial burdens; the result before interests namely the Net Operating Profit After Taxes or NOPAT which represents the EBIT calculated upon subtraction of the taxes. Given the Weighted Average Cost of Capital or WACC, the EVA of a period is equal to the difference between the NOPAT and the Net Invested Capital multiplied by the WACC, or by its cost as follows:

$$EVA = NOPAT - \text{Invested Capital} \times WACC.$$

When compared to the conventional evaluations, such as ROI, ROE and EPS, the EVA-based evaluation considers the following three substantial management elements of a company: the EBIT calculated upon subtraction of the taxes, the Invested Capital and the WACC. In other words, the EVA-based evaluation does not only consider the economic result of a company, but also the capital investment and its cost.

According to the indications of the same authors Stern and Stewart, the application of the EVA methodology is carried out at macro aggregate level (namely at company/corporation or at least at business line level). In the opinion of Stern and Stewart and according to the empirical experience matured in U.S.A., a sufficiently strict and direct connection exists between the EVA figure of a company quoted on the Stock Exchange and its same capitalisation: at each increment of the EVA level realised, an increase will be realised on the Exchange Stock quotation of the company shares. The EVA figure, therefore, will be considered as a parameter adapted to quantify the creation of value to the share holders.

A similar indicator which enables to evaluate the Economic Value Added of a company is the Cash Value Added or CVA. The CVA figure is an indicator developed by the Boston Consulting Group in order to measure the value creating internal capability of a company. According to the above mentioned authors, the CVA figure is an absolute measure of the contribute of the operative performance to creation of value. It would express the residual Cash Flow as calculated after subtraction of the reinvestment cost of the Fixed Capital and of the cost of the Invested Capital, according to one of the following formulas:

$$CVA = GCF - EC - GI \times WACC$$

or

$$CVA = (CFROI - WACC) \times GI$$

where

- is the Gross Investment, namely the historical value of the inflation adjusted Fixed Capital summed to the Circulating Capital; in particular, the Fixed Capital ought to be inflation adjusted in order to keep its real reacquisition cost into account;
- GCF represents the Gross Cash Flow, namely the EBIT as obtained after subtraction of the taxes and summed to the Amortisation's;
- EC is the Economic Depreciation, expressed by

$$\frac{WACC}{(1 + WACC)^n} Fixed\_Capital\_subject\_to\_amortisation$$

where $n$ is the operation life of the Fixed Capital subject to amortisation; and
- CFROI is expressed by

$$\frac{GCF - ED}{GI}.$$

The above formulation is rather similar to the EVA formulation, even if cash values are utilised and adjustment figures are introduced in order to consider the useful duration of the effected fixed investments and their replacement cost.

Also the application of the CVA methodology is substantially carried out only at macro aggregate level (namely at company/corporation or at least at business line level).

When the above two methods are compared to one another, the CVA method has the advantage that it is based upon values that are less affected by accounting factors and that it by-passes the problem of the so-called "wrong periodising", namely the tendency to quantify the period value generation, in conditions of equal performances, to an as more increasing amount, as more we are in the presence of already largely amortised Fixed Assets. On the other side, the EVA method has the advantage that its application is more straightforward, in view of the fact that the values upon which its calculation is based are almost all already largely available in the company book-keeping.

In the frame of the company practice, the closest attention is called to the subject of the comparison between the efficiency and the capital cost. Many important groups have adopted proprietary formulas which are different from the EVA- and CVA-based ones under aspects of noticeable relevance, even if they share their object. The object to be achieved is to have anyway a performance indicator available, adapted to measure the company performance in its whole, expressed as Economic Value Added, by always comparing an economic variability to a financial variability.

The economic figures by which the economic value added as generated by a company is expressed, such as the EVA, CVA and similar figures, have as common characterising feature the capability to measure, at preventive (or budget) level or at final or consumptive level, the comprehensive result of a company or of a division. At budget level, in fact, it is possible to estimate the preventive expected value that a division or a company generate in a determined period. At consumptive level, such expectation can be suitably checked.

In other words, the EVA-based formula, the CVA-based formula and all formulas based upon similar economic figures are the synthesis of criteria for company performance control, both at budget and at final levels, and differentiate from the conventional evaluation procedures for performance measurement (ROI, ROE) only because the evaluation associates an economic result to a financial variation represented by the capital cost.

However, all known methods for evaluation of the economic value added of a company have some drawbacks, mainly in respect of the evaluation of companies operating under work order.

In fact, all conventional methods furnish an evaluation related to a macro aggregate having at least a "*pro forma*" holdings status: namely the generation of an economic value added created by the whole company, by neglecting the individual contributes generated by each work order. Since in all companies operating under work order , the economic and financial results are given by the sum of the management results of all individual contracts, a correct management and evaluation of the company can be carried out only by individually measuring the creation of value by each contract. It is apparent that such a decomposition, if possible, should also overcome the problem of performing a noticeable number of calculations, due to proliferation of evaluations. Therefore, all conventional methods appear to be completely inadequate in respect of the evaluation of the economic value added of individual work orders and, consequently, in respect of the evaluation of companies operating under work order.

It is the object of this invention, therefore, to enable an evaluation of the economic value added of individual work orders developable by a company to be performed in simple and reliable manner, both at budget and at final level, so that it can be efficiently utilised as a support means both by the personnel entrusted with the preventive evaluation and/or with the management of the work orders and by the investors who have to decide whether investing in the company is convenient or not.

It is specific subject matter of this invention an automatic system for evaluating the economic value added of individual work orders developable by an aggregated economic entity, such as for instance the production line of a company or a division of a company or a company, comprising data processing means connected to:

- data acquiring and/or receiving means, and
- display means, and

in which the display means are adapted to display at least a first mask corresponding to entering economic and/or financial data, the acquiring and receiving means transferring the acquired and/or received economic and/or financial data to said data processing means, characterised in that said data processing means are adapted to determine, in respect of at least one work order developable by an aggregated economic entity, based upon economic and/or financial data received from said data acquiring and/or receiving means:

- the Earning Before Interests and Taxes or EBIT connected with the work order,
- the Net Operating Profit After Taxes or NOPAT connected with the work order,
- the Invested Capital of the work order,
- the Economic Value Added or EVA of at least one period of the work order according to the formula:

$$EVA = NOPAT - \text{Invested Capital of the Order} \times WACC$$

where WACC is the Weighted Average Cost of Capital, and in which the Invested Capital of the Order includes a fraction of the Invested Capital of said economic entity that said data processing means assign to said at least one work orders according to at least one assignment rules.

In particular, in the following description and in the claims, under the term work order we ca mean, by way of illustration not by way of limitation,

- an activity which is subject matter of a supply contract by a company to a third party,
- an internal activity of a company in respect of one or more product production lines, and

- an internal research and development activity of a company.

Still according to this invention, said at least one assignment rules comprise at least one of the rules of the following group of rules:

- proportional assignment of direct internal hours developed by said work order to said fraction in said aggregated economic entity,
- proportional assignment of square meters of the estates utilised by said work order to said fraction in said aggregated economic entity,
- proportional assignment of cubic meters of the estates utilised by said work order to said fraction in said aggregated economic entity,
- proportional assignment of the dedicated number of workers utilised by said work order to said fraction in said aggregated economic entity,
- assignment of a fixed fraction,
- assignment proportional to the percentage of specific resources utilised by said work order in said aggregated economic entity,
- assignment proportional to the percentage fraction of the total revenues (collections) of the work order in said aggregated economic entity,
- assignment proportional to the percentage fraction of the current works or CW of the work order in said aggregated economic entity,
- assignment proportional to the percentage fraction of the gross margin of the work order in said aggregated economic entity,
- assignment proportional to the fraction in said aggregated economic entity related to a weighted average figure correlated to the risk of the work order,
- assignment proportional to the fraction in said aggregated economic entity related to the internal costs of the work order, with exclusion of sub-supplies and of co-supplies,
- assignment proportional to the fraction in said aggregated economic entity related to the engagement of a function of said aggregated economic entity by the work order,
- assignment proportional to the fraction in said aggregated economic entity related to a specific item of the general costs for resources utilised by the work order,
- assignment proportional to the fraction in said aggregated economic entity related to the number of common parts utilised by the work order, and
- assignment proportional to the fraction in said aggregated economic entity of the costs relating to purchase of materials and/or co-supplies and/or sub-supplies, or Material Handling, intended for utilisation in the work order.

Equally according to this invention, the Invested Capital of the Order can also include a fraction of the liabilities, of the fund cumulation for End of Work Relation Settlement or EWRS of said aggregated economic entity that said data processing means assign to said at least one work orders according to at least one assignment rules of the EWRS.
Again according to this invention, said at least one assignment rules of the EWRS can comprise at least one of the rules of the following group of rules:

- proportional assignment of direct internal hours developed by said work order to said fraction in said aggregated economic entity,
- proportional assignment of square meters of the estates utilised by said work order to said fraction in said aggregated economic entity,
- proportional assignment of cubic meters of the estates utilised by said work order to said fraction in said aggregated economic entity,
- proportional assignment of the dedicated number of workers utilised by said work order to said fraction in said aggregated economic entity,
- assignment of a fixed fraction,
- assignment proportional to the percentage of specific resources utilised by said work order in said aggregated economic entity,
- assignment proportional to the percentage fraction of the total revenues (collections) of the work order in said aggregated economic entity,
- assignment proportional to the percentage fraction of the current works or CW of the work order in said aggregated economic entity,
- assignment proportional to the percentage fraction of the gross margin of the work order in said aggregated economic entity,

- assignment proportional to the fraction in said aggregated economic entity related to a weighted average figure correlated to the risk of the work order,
- assignment proportional to the fraction in said aggregated economic entity related to the internal costs of the work order, with exclusion of sub-supplies and of co-supplies,
- assignment proportional to the fraction in said aggregated economic entity related to the engagement of a function of said aggregated economic entity by the work order,
- assignment proportional to the fraction in said aggregated economic entity related to a specific item of the general costs for resources utilised by the work order,
- assignment proportional to the fraction in said aggregated economic entity related to the number of common parts utilised by the work order, and
- assignment proportional to the fraction in said aggregated economic entity of the costs relating to purchase of materials and/or co-supplies and/or sub-supplies, or Material Handling, intended for utilisation in the work order.

Preferably according to this invention, said data processing means are adapted to determine the comprehensive Economic Value Added of said at least one work orders by means of the sum of all up-dated period Economic Values Added of the concerned work order.

Still more preferably according to this invention, said data processing means are adapted to determine the Economic Value Added of at least one period of all work orders developable by an individual aggregated economic entity, so that the sum of all Economic Values Added of said at least one periods of all work orders is equal to the Economic Value Added of at least one period of said aggregated economic entity.

It is further specific subject matter of this invention an automatic method for evaluating the economic value added of individual work orders developable by an aggregated economic entity, such as for instance the production line of a company or a division of a company or a company, characterised in that, based upon acquired economic and/or financial data, it determines in respect of at least one work order developable by an aggregated economic entity:

- the Earning Before Interests and Taxes or EBIT of the work order,
- the Net Operating Profit After Taxes or NOPAT of the work order,
- the Invested Capital in the work order,
- the Economic Value Added of at least one period of the work order according to the following formula:

$$EVA = NOPAT - \text{Invested Capital of the Order} \times WACC$$

where WACC is the Weighted Average Cost of the Capital and where the Invested Capital of the Order includes a fraction of the Invested Capital of said aggregated economic entity assigned to said at least one work orders according to at least one assignment rules.

Again according to this invention, said at least one assignment rules can comprise at least one of the rules of the following group of rules:

- proportional assignment of direct internal hours developed by said work order to said fraction in said aggregated economic entity,
- proportional assignment of square meters of the estates utilised by said work order to said fraction in said aggregated economic entity,
- proportional assignment of cubic meters of the estates utilised by said work order to said fraction in said aggregated economic entity,
- proportional assignment of the dedicated number of workers utilised by said work order to said fraction in said aggregated economic entity,
- assignment of a fixed fraction,
- assignment proportional to the percentage of specific resources utilised by said work order in said aggregated economic entity,
- assignment proportional to the percentage fraction of the total revenues (collections) of the work order in said aggregated economic entity,
- assignment proportional to the percentage fraction of the current works or CW of the work order in said aggregated economic entity,
- assignment proportional to the percentage fraction of the gross margin of the work order in said aggregated economic entity,
- assignment proportional to the fraction in said aggregated economic entity related to a weighted average figure correlated to the risk of the work order,

- assignment proportional to the fraction in said aggregated economic entity related to the internal costs of the work order, with exclusion of sub-supplies and of co-supplies,
- assignment proportional to the fraction in said aggregated economic entity related to the engagement of a function of said aggregated economic entity by the work order,
- assignment proportional to the fraction in said aggregated economic entity related to a specific item of the general costs for resources utilised by the work order,
- assignment proportional to the fraction in said aggregated economic entity related to the number of common parts utilised by the work order, and
- assignment proportional to the fraction in said aggregated economic entity of the costs relating to purchase of materials and/or co-supplies and/or sub-supplies, or Material Handling, intended for utilisation in the work order.

Still according to this invention, the Invested Capital of the Order can further include a fraction of the liabilities, of the fund cumulation for End of Work Relation Settlement or EWRS of said aggregated economic entity assigned to said at least one work orders according to at least one assignment rules of the EWRS.

Further according to this invention, said at least one assignment rules of the EWRS can comprise at least one of the rules of the following group of rules:

- proportional assignment of direct internal hours developed by said work order to said fraction in said aggregated economic entity,
- proportional assignment of square meters of the estates utilised by said work order to said fraction in said aggregated economic entity,
- proportional assignment of cubic meters of the estates utilised by said work order to said fraction in said aggregated economic entity,
- proportional assignment of the dedicated number of workers utilised by said work order to said fraction in said aggregated economic entity,
- assignment of a fixed fraction,
- assignment proportional to the percentage of specific resources utilised by said work order in said aggregated economic entity,
- assignment proportional to the percentage fraction of the total revenues (collections) of the work order in said aggregated economic entity,
- assignment proportional to the percentage fraction of the current works or CW of the work order in said aggregated economic entity,
- assignment proportional to the percentage fraction of the gross margin of the work order in said aggregated economic entity,
- assignment proportional to the fraction in said aggregated economic entity related to a weighted average figure correlated to the risk of the work order,
- assignment proportional to the fraction in said aggregated economic entity related to the internal costs of the work order, with exclusion of sub-supplies and of co-supplies,
- assignment proportional to the fraction in said aggregated economic entity related to the engagement of a function of said aggregated economic entity by the work order,
- assignment proportional to the fraction in said aggregated economic entity related to a specific item of the general costs for resources utilised by the work order,
- assignment proportional to the fraction in said aggregated economic entity related to the number of common parts utilised by the work order, and
- assignment proportional to the fraction in said aggregated economic entity of the costs relating to purchase of materials and/or co-supplies and/or sub-supplies, or Material Handling, intended for utilisation in the work order.

Preferably, according to this invention, said automatic method determines the comprehensive Economic Value Added of said at least one work orders by means of the sum of all up-dated period Economic Values Added of the concerned work order.

Still preferably according to this invention, said automatic method determines the Economic Value Added of at least one period of all work orders developable by an individual aggregated economic entity, so that the sum of all Economic Values Added of said at least one periods of all work orders is equal to the Economic Value Added of at least one period of said aggregated economic entity.

It further specific subject matter of this invention a computer program comprising code means adapted to perform, when they operate on a computer, the automatic method for economic evaluation of individual work orders according to this invention.

It further specific subject matter of this invention a computer readable memory support having a program stored therein, characterised in that said program is the above described computer program.

This invention will be now described by way of illustration, not by way of limitation, according to its preferred embodiments, by particularly referring to the Figures of the annexed drawings, in which:

Figure 1 is a flow chart of the method for determining the Economic Value Added of an order according to this invention,

Figure 2 is a flow chart of the method for determining the Debt Free Cash Flow or DFCF of a work order according to this invention.

The inventors have developed a very different concept with respect to a comprehensive value determining parameter for a company, in that it is aimed to defining the amount to which each specific contract of the companies operating under work order is amenable to generate a higher or lower value.

The material result of the invention consists in not only furnishing more significant information about the company performance, but even more in the possibility to make available to the personnel (as well as to the investors) all more suitable and efficient instruments to evaluate and ascertain which work orders are value generating work orders and which other work orders are value destroying work orders.

By utilisation of conventional methods, the management staff faces an object related to a macro-aggregate: generating a value of the whole company. By utilisation of this invention, by which the value of each and every contract is measured, the staff personnel establishes and checks , before taking a decision, rather than by only controlling the results *a posteriori*, to which amount the choice to be performed will be amenable to generate or not a value to the whole company.

Aiming at making such result possible and at overcoming the intrinsic limits of the known prior art, it has been necessary to design a model in which it was possible to assign to each contract not only the eventual economic result, but also the associated capital investment related both to the fixed capital of the company and to the circulating one. While, in respect of the latter, the assignment could also be relatively simple by means of a suitable conventional management system, noticeable studies and developments have been necessary in order to design the assignment of the fixed capital of the company to each individual work order. This invention, in fact, also determines the modes according to which the concerned work order utilises said fixed capital of the company during the development of the work order itself.

Since said fixed capital is comprised of material and immaterial properties having different characters and scopes, it has been necessary to develop specific algorithms correlated to the character and to the scope of the capital itself, adapted to measure specific amounts of each component as utilised in the operative development of the work order. At the same time, also the passivity or liability connected to cumulation of the funds for End of Work Relation Settlement or EWRS has been assigned to each work order by means of suitable algorithms. The present invention enables the management staff to keep not only the operative result, but also and in the first place the capital they are investing in the daily management of the contract under strict control, which was not possible before the suggestions of this invention, because only information items relating to the whole capital of the company were available.

As a consequence hereof, the instrument realised by this invention, that can be utilised by means of simulation techniques, is adapted to suggest to the management staff the best possible management solution in respect of any available alternative, before any related decision is taken.

For all companies operating under work order, the economic and financial results are no more than the sum of the management results of all individual contracts: by means of this invention, it is possible to measure the contribution of each and every contract to the creation of the comprehensive value of the company.

Among the internationally utilised evaluation techniques to evaluate the net capital of a company and consequently to establish the unit share value, we can mention the method of the Debt Free Cash Flow or DFCF which measures, in terms of present value, the value of the operative activities of the company expressed by the Cash Flow. The Net Capital value is obtained by subtracting the debt value from the operative activity value. In other words, assuming that the EBIT is the operative earning or the Earning Before Interests and Taxes, said DFCF is obtained as follows:

$$EBIT = (Taxes\ on\ the\ operative\ earnings) + amortisation's + (EWRS$$

$$variation) + (circulating\ capital\ decrease/increase) - (fixed\ investments$$

$$after\ subtraction\ of\ disinvestments).$$

This invention, by utilising the same DFCF aggregate valid for the company in respect of each work order (based upon the above discussed algorithms), is capable to establish to which amount the behaviour of each contract is adapted to increase or decrease the value of the shares.

This method, which was not available in the prior art, enables more precise and reliable results to be obtained with respect to the conventional criteria, for determination of the value of a company and, therefore, it can have a very significant outcome in all those cases in which, as a consequence of specific law provisions in respect of normal transactions between subjects, it is necessary to establish the value of the net capital.

The present invention fulfils the condition that the sum of the EVA's of the individual work orders correspond to the EVA of the aggregate to which they belong, such as a division of a company or a company as a whole. This is made possible by wholly assigning to the work orders all costs and the Invested Capital of the concerned unit.

As far as the costs are concerned, in addition to its own respective costs, also a fraction of the general costs and of the structure costs of the concerned unit are assigned to the work order, in order to obtain the result that the whole above mentioned costs be absorbed by the work orders generating the income. Upon establishing then the rules to be applied for performing the assignment, the comprehensive amount of the general costs to be assigned is identified each year and subsequently it is distributed to the individual work orders.

The same procedure is followed in respect of the Fixed Capital and in respect of the EWRS fund. As far as the Fixed Capital is concerned (at least in respect of the component relating to material and non-material immobilisation's), according to the logic of this invention, such Capital is utilised just by the work orders and, therefore, it is to be assigned or allotted to them. In fact, the plants, the machines, the equipment and all non-material goods existing in the division or in the whole company which they belong to are exploited by said work orders. This invention carries out an assignment of the Fixed Capital according one or more assignment rules, in such a way as to let it be absorbed in its whole by the income generating work orders. Such assignment or distribution can be effected based upon the direct internal hours developed by the concerned work order in each manufacturing unit or factory, because they represent the best figure of the exploitation and utilisation rate of the immobilisation's. Other rules, eventually applied in combination with one another or with the hours developed by the work order provide for an assignment proportional to:

- square meters of the estates utilised by the personnel employed in said work order,
- cubic meters of the estates utilised by the personnel employed in said work order,
- number of workers dedicated to exploitation of said work order,
- a fixed fraction,
- utilisation percentage of specific resources,
- percentage fraction of the total revenues (collections),
- percentage fraction of the total Outstanding Activities or OA (Current Works or CW),
- percentage fraction of the gross margin of the work order,
- fraction related to a weighted average figure correlated to the risk of the work order,
- fraction related to the internal costs of the work order, with exclusion of sub-supplies and of co-supplies,
- fraction related to the engagement of a company function (such as the engineering hours),
- fraction related to a specific item of the general costs (such as the cost connected to the consumption of electric power),
- fraction related to the number of common parts utilised by the work order (if applicable), and
- fraction proportional to the costs relating to purchase of materials and/or co-supplies and/or sub-supplies, such as purchases and reception, input tests, storage (Material Handling, intended for utilisation in the work order).

For each period, not necessarily coincident with one year, the method provides for ascertaining the comprehensive amount of the Fixed Capital stock to be assigned or allotted and, upon establishing certain assignment rules, the method proceeds with assigning it to the work orders.

As far as the EWRS fund is concerned, the procedure is substantially the same: at each year, a fraction of the EWRS fund belonging to the involved division or company is assigned to the work order, the distribution being based upon an assignment rule, also in this case usually based upon the number of internal direct hours developed by the work order.

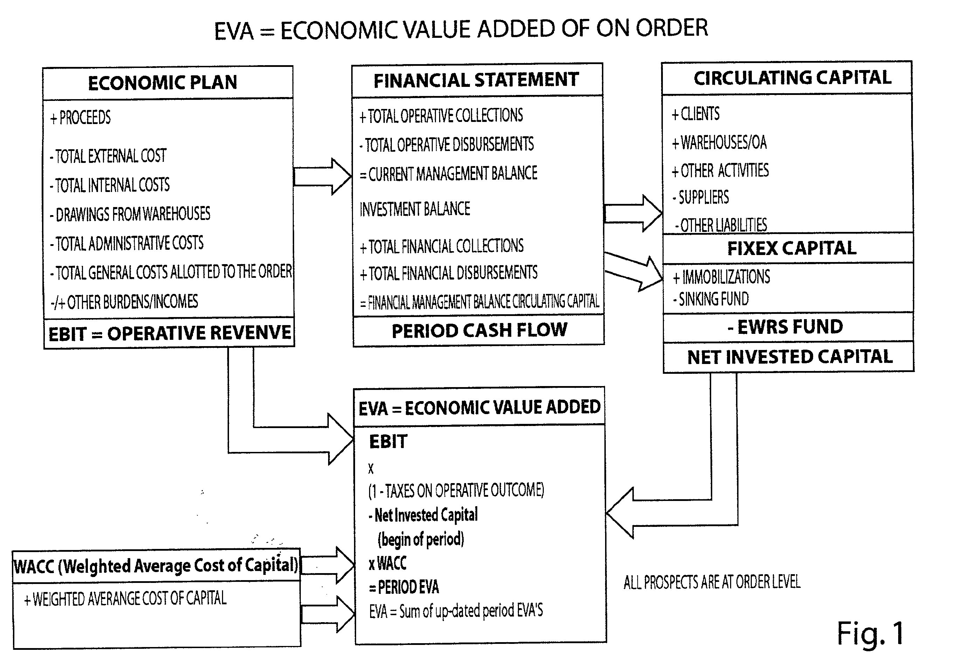

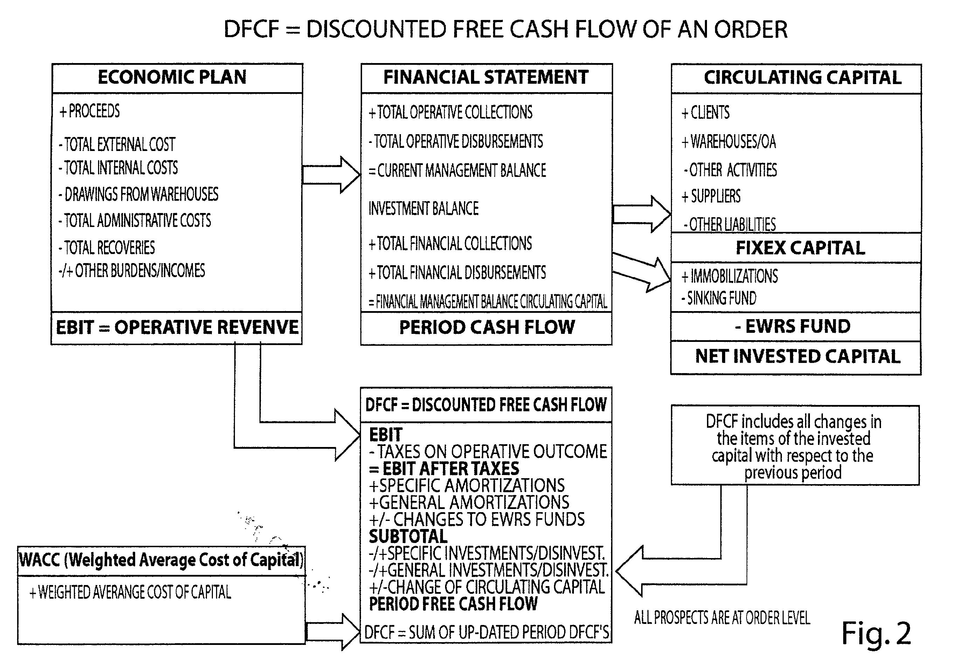

Figures 1 and 2 show two flow charts relating to the method for determining the Economic Value Added of an order and to the method for determining the Debt Free Cash Flow or DFCF of an order according to this invention, respectively. Such flow charts illustrate the above discussed methods and are immediately understandable by those skilled in the art.

The main feature of this invention is the assignment of a fraction of the Fixed Capital and of the EWRS fund of the concerned unit to the work order. Thanks to this assignment it is possible to perform the computation of the value of each individual work order according to the very rules of the EVA methodology. This invention, therefore, enables for the first time the principles and the methodologies of the EVA to be applied at individual work order or basic production unit level.

Furthermore, by up-dating the values, this enables to ascertain the time at which the financial balance will be reached by each work order during its development.

Just in view of its "bottom-up" approach oriented from the individual work orders to the macro-aggregate of a division or even of a whole company, an innovative instrument is realised for managing a company and its application enables a more rapid, clear and effective review of all value generating components of a company with respect to the "top-down" EVA systems, that are generally applied to the division or company macro-aggregate.

The preferred embodiments of this invention have been described and a number of variations have been suggested hereinbefore, but it should expressly be understood that those skilled in the art can make other variations and changes, without so departing from the scope thereof, as defined by the following claims.

**Claims**

1. An automatic system for evaluating the economic value added of individual work orders developable by an aggregated economic entity, comprising data processing means connected to:

   - data acquiring and/or receiving means, and
   - display means, and

   in which the display means are adapted to display at least a first mask corresponding to entering economic and/ or financial data, the acquiring and receiving means transferring the acquired and/or received economic and/or financial data to said data processing means,
   **characterised in that**
   said data processing means are adapted to determine, in respect of at least one work order developable by an aggregated economic entity, based upon economic and/or financial data received from said data acquiring and/or receiving means:

   - the Earning Before Interests and Taxes or EBIT connected with the work order,
   - the Net Operating Profit After Taxes or NOPAT connected with the work order,
   - the Invested Capital of the Order,
   - the Economic Value Added or EVA of at least one period of the work order according to the formula:

   $$EVA = NOPAT - Invested\ Capital\ of\ the\ Order\ x\ WACC$$

   where WACC is the Weighted Average Cost of Capital, and in which the Invested Capital of the Order includes a fraction of the Invested Capital of said economic entity that said data processing means assign to said at least one work orders according to at least one assignment rules.

2. An automatic system according to claim 1, **characterised in that** said at least one assignment rules comprise at least one of the rules of the following group of rules:

   - proportional assignment of direct internal hours developed by said work order to said fraction in said aggregated economic entity,
   - proportional assignment of square meters of the estates utilised by said work order to said fraction in said aggregated economic entity,
   - proportional assignment of cubic meters of the estates utilised by said work order to said fraction in said aggregated economic entity,
   - proportional assignment of the dedicated number of workers utilised by said work order to said fraction in said aggregated economic entity,
   - assignment of a fixed fraction,
   - assignment proportional to the percentage of specific resources utilised by said work order in said aggregated economic entity,
   - assignment proportional to the percentage fraction of the total revenues (collections) of the work order in said aggregated economic entity,
   - assignment proportional to the percentage fraction of the current works or CW of the work order in said aggregated economic entity,

- assignment proportional to the percentage fraction of the gross margin of the work order in said aggregated economic entity,
- assignment proportional to the fraction in said aggregated economic entity related to a weighted average figure correlated to the risk of the work order,
- assignment proportional to the fraction in said aggregated economic entity related to the internal costs of the work order, with exclusion of sub-supplies and of co-supplies,
- assignment proportional to the fraction in said aggregated economic entity related to the engagement of a function of said aggregated economic entity by the work order,
- assignment proportional to the fraction in said aggregated economic entity related to a specific item of the general costs for resources utilised by the work order,
- assignment proportional to the fraction in said aggregated economic entity related to the number of common parts utilised by the work order, and
- assignment proportional to the fraction in said aggregated economic entity of the costs relating to purchase of materials and/or co-supplies and/or sub-supplies, or Material Handling, intended for utilisation in the work order.

3. An automatic system according to claim 1 or 2, **characterised in that** the Invested Capital of the Order also includes a fraction of the liabilities, of the fund cumulation for End of Work Relation Settlement or EWRS of said aggregated economic entity that said data processing means assign to said at least one work orders according to at least one assignment rules of the EWRS.

4. An automatic system according to claim 3, **characterised in that** said at least one assignment rules of the EWRS comprise at least one of the rules of the following group of rules:

- proportional assignment of direct internal hours developed by said work order to said fraction in said aggregated economic entity,
- proportional assignment of square meters of the estates utilised by said work order to said fraction in said aggregated economic entity,
- proportional assignment of cubic meters of the estates utilised by said work order to said fraction in said aggregated economic entity,
- proportional assignment of the dedicated number of workers utilised by said work order to said fraction in said aggregated economic entity,
- assignment of a fixed fraction,
- assignment proportional to the percentage of specific resources utilised by said work order in said aggregated economic entity,
- assignment proportional to the percentage fraction of the total revenues (collections) of the work order in said aggregated economic entity,
- assignment proportional to the percentage fraction of the current works or CW of the work order in said aggregated economic entity,
- assignment proportional to the percentage fraction of the gross margin of the work order in said aggregated economic entity,
- assignment proportional to the fraction in said aggregated economic entity related to a weighted average figure correlated to the risk of the work order,
- assignment proportional to the fraction in said aggregated economic entity related to the internal costs of the work order, with exclusion of sub-supplies and of co-supplies,
- assignment proportional to the fraction in said aggregated economic entity related to the engagement of a function of said aggregated economic entity by the work order,
- assignment proportional to the fraction in said aggregated economic entity related to a specific item of the general costs for resources utilised by the work order,
- assignment proportional to the fraction in said aggregated economic entity related to the number of common parts utilised by the work order, and
- assignment proportional to the fraction in said aggregated economic entity of the costs relating to purchase of materials and/or co-supplies and/or sub-supplies, or Material Handling, intended for utilisation in the work order.

5. An automatic system according to any one of the preceding claims, **characterised in that** said data processing means are adapted to determine the comprehensive Economic Value Added of said at least one work orders by means of the sum of all up-dated period Economic Values Added of the concerned work order.

**6.** An automatic system according to any one of the preceding claims, **characterised in that** said data processing means are adapted to determine the Economic Value Added of at least one period of all work orders developable by an individual aggregated economic entity, so that the sum of all Economic Values Added of said at least one periods of all work orders is equal to the Economic Value Added of at least one period of said aggregated economic entity.

**7.** An automatic system according to any one of the preceding claims, **characterised in that** said aggregated economic entity is a production line of a company or a division of a company or a company.

**8.** An automatic system for evaluating the economic value added of individual work orders developable by an aggregated economic entity, **characterised in that**, based upon acquired economic and/or financial data, it determines in respect of at least one work order developable by an aggregated economic entity :

- the Earning Before Interests and Taxes or EBIT of the work order,
- the Net Operating Profit After Taxes or NOPAT of the work order,
- the Invested Capital in the work order,
- the Economic Value Added of at least one period of the work order according to the following formula:

$$EVA = NOPAT - \text{Invested Capital of the Order} \times WACC$$

where WACC is the Weighted Average Cost of the Capital and where the Invested Capital of the Order includes a fraction of the Invested Capital of said aggregated economic entity assigned to said at least one work orders according to at least one assignment rules.

**9.** An automatic method according to claim 8, **characterised in that** said at least one assignment rules comprise at least one of the rules of the following group of rules:

- proportional assignment of direct internal hours developed by said work order to said fraction in said aggregated economic entity,
- proportional assignment of square meters of the estates utilised by said work order to said fraction in said aggregated economic entity,
- proportional assignment of cubic meters of the estates utilised by said work order to said fraction in said aggregated economic entity,
- proportional assignment of the dedicated number of workers utilised by said work order to said fraction in said aggregated economic entity,
- assignment of a fixed fraction,
- assignment proportional to the percentage of specific resources utilised by said work order in said aggregated economic entity,
- assignment proportional to the percentage fraction of the total revenues (collections) of the work order in said aggregated economic entity,
- assignment proportional to the percentage fraction of the current works or CW of the work order in said aggregated economic entity,
- assignment proportional to the percentage fraction of the gross margin of the work order in said aggregated economic entity,
- assignment proportional to the fraction in said aggregated economic entity related to a weighted average figure correlated to the risk of the work order,
- assignment proportional to the fraction in said aggregated economic entity related to the internal costs of the work order, with exclusion of sub-supplies and of co-supplies,
- assignment proportional to the fraction in said aggregated economic entity related to the engagement of a function of said aggregated economic entity by the work order,
- assignment proportional to the fraction in said aggregated economic entity related to a specific item of the general costs for resources utilised by the work order,
- assignment proportional to the fraction in said aggregated economic entity related to the number of common parts utilised by the work order, and
- assignment proportional to the fraction in said aggregated economic entity of the costs relating to purchase of materials and/or co-supplies and/or sub-supplies, or Material Handling, intended for utilisation in the work order.

**10.** An automatic method according to claim , **characterised in that** the Invested Capital of the work order further includes a fraction of the liabilities, of the fund cumulation for End of Work Relation Settlement or EWRS of said aggregated economic entity assigned to said at least one work orders according to at least one assignment rules of the EWRS.

**11.** An automatic method according to claim , **characterised in that** said at least one assignment rules of the EWRS comprise at least one of the rules of the following group of rules:

- proportional assignment of direct internal hours developed by said work order to said fraction in said aggregated economic entity,
- proportional assignment of square meters of the estates utilised by said work order to said fraction in said aggregated economic entity,
- proportional assignment of cubic meters of the estates utilised by said work order to said fraction in said aggregated economic entity,
- proportional assignment of the dedicated number of workers utilised by said work order to said fraction in said aggregated economic entity,
- assignment of a fixed fraction,
- assignment proportional to the percentage of specific resources utilised by said work order in said aggregated economic entity,
- assignment proportional to the percentage fraction of the total revenues (collections) of the work order in said aggregated economic entity,
- assignment proportional to the percentage fraction of the current works or CW of the work order in said aggregated economic entity,
- assignment proportional to the percentage fraction of the gross margin of the work order in said aggregated economic entity,
- assignment proportional to the fraction in said aggregated economic entity related to a weighted average figure correlated to the risk of the work order,
- assignment proportional to the fraction in said aggregated economic entity related to the internal costs of the work order, with exclusion of sub-supplies and of co-supplies,
- assignment proportional to the fraction in said aggregated economic entity related to the engagement of a function of said aggregated economic entity by the work order,
- assignment proportional to the fraction in said aggregated economic entity related to a specific item of the general costs for resources utilised by the work order,
- assignment proportional to the fraction in said aggregated economic entity related to the number of common parts utilised by the work order, and
- assignment proportional to the fraction in said aggregated economic entity of the costs relating to purchase of materials and/or co-supplies and/or sub-supplies, or Material Handling, intended for utilisation in the work order.

**12.** An automatic method according to any one of the preceding claims, **characterised in that** it determines the comprehensive Economic Value Added of said at least one work orders by means of the sum of all up-dated period Economic Values Added of the concerned work order.

**13.** An automatic method according to any one of the preceding claims, **characterised in that** it determines the Economic Value Added of at least one period of all work orders developable by an individual aggregated economic entity, so that the sum of all Economic Values Added of said at least one periods of all work orders is equal to the Economic Value Added of at least one period of said aggregated economic entity.

**14.** An automatic method according to any one of the preceding claims, **characterised in that** said aggregated economic entity is a production line of a company or a division of a company or a company.

**15.** A computer program **characterised in that** it comprises code means adapted to perform, when they operate on a computer, the automatic method for economic evaluation of individual work orders according to any one of claims 8 to 14.

**16.** A computer readable memory support having a program stored therein, **characterised in that** said program is a computer program according to claim 15.

# EVA = ECONOMIC VALUE ADDED OF ON ORDER

| ECONOMIC PLAN | FINANCIAL STATEMENT | CIRCULATING CAPITAL |
|---|---|---|
| + PROCEEDS<br><br>- TOTAL EXTERNAL COST<br>- TOTAL INTERNAL COSTS<br>- DRAWINGS FROM WAREHOUSES<br>- TOTAL ADMINISTRATIVE COSTS<br>- TOTAL GENERAL COSTS ALLOTTED TO THE ORDER<br>-/+ OTHER BURDENS/INCOMES | + TOTAL OPERATIVE COLLECTIONS<br>- TOTAL OPERATIVE DISBURSEMENTS<br>= CURRENT MANAGEMENT BALANCE<br><br>INVESTMENT BALANCE<br><br>+ TOTAL FINANCIAL COLLECTIONS<br>+ TOTAL FINANCIAL DISBURSEMENTS<br>= FINANCIAL MANAGEMENT BALANCE CIRCULATING CAPITAL | + CLIENTS<br>+ WAREHOUSES/OA<br>+ OTHER ACTIVITIES<br>- SUPPLIERS<br>- OTHER LIABILITIES |
| **EBIT = OPERATIVE REVENVE** | **PERIOD CASH FLOW** | **FIXEX CAPITAL**<br>+ IMMOBILIZATIONS<br>- SINKING FUND |
|  |  | **- EWRS FUND** |
|  |  | **NET INVESTED CAPITAL** |

**EVA = ECONOMIC VALUE ADDED**

**EBIT**
x
(1 - TAXES ON OPERATIVE OUTCOME)
**- Net Invested Capital**
  **(begin of period)**
x WACC
= PERIOD EVA
EVA = Sum of up-dated period EVA'S

**WACC (Welghted Average Cost of Capital)**
+ WEIGHTED AVERANGE COST OF CAPITAL

ALL PROSPECTS ARE AT ORDER LEVEL

Fig. 1

EP 1 304 643 A1

# DFCF = DISCOUNTED FREE CASH FLOW OF AN ORDER

| **ECONOMIC PLAN** |
| --- |
| + PROCEEDS |
| - TOTAL EXTERNAL COST |
| - TOTAL INTERNAL COSTS |
| - DRAWINGS FROM WAREHOUSES |
| - TOTAL ADMINISTRATIVE COSTS |
| - TOTAL RECOVERIES |
| -/+ OTHER BURDENS/INCOMES |
| **EBIT = OPERATIVE REVENVE** |

| **FINANCIAL STATEMENT** |
| --- |
| + TOTAL OPERATIVE COLLECTIONS |
| - TOTAL OPERATIVE DISBURSEMENTS |
| = CURRENT MANAGEMENT BALANCE |
| INVESTMENT BALANCE |
| + TOTAL FINANCIAL COLLECTIONS |
| + TOTAL FINANCIAL DISBURSEMENTS |
| = FINANCIAL MANAGEMENT BALANCE CIRCULATING CAPITAL |
| **PERIOD CASH FLOW** |

| **CIRCULATING CAPITAL** |
| --- |
| + CLIENTS |
| + WAREHOUSES/OA |
| - OTHER ACTIVITIES |
| + SUPPLIERS |
| - OTHER LIABILITIES |

| **FIXEX CAPITAL** |
| --- |
| + IMMOBILIZATIONS |
| - SINKING FUND |

| **- EWRS FUND** |
| --- |
| **NET INVESTED CAPITAL** |

| **DFCF = DISCOUNTED FREE CASH FLOW** |
| --- |
| **EBIT**<br>- TAXES ON OPERATIVE OUTCOME<br>**= EBIT AFTER TAXES**<br>+ SPECIFIC AMORTIZATIONS<br>+ GENERAL AMORTIZATIONS<br>+/- CHANGES TO EWRS FUNDS<br>**SUBTOTAL**<br>-/+ SPECIFIC INVESTMENTS/DISINVEST.<br>-/+ GENERAL INVESTMENTS/DISINVEST.<br>+/- CHANGE OF CIRCULATING CAPITAL<br>**PERIOD FREE CASH FLOW** |
| DFCF = SUM OF UP-DATED PERIOD DFCF'S |

DFCF includes all changes in the items of the invested capital with respect to the previous period

ALL PROSPECTS ARE AT ORDER LEVEL

| **WACC (Welghted Average Cost of Capital)** |
| --- |
| + WEIGHTED AVERANGE COST OF CAPITAL |

Fig. 2

EP 1 304 643 A1

**European Patent**
**Office**

**DECLARATION**

which under Rule 45 of the European Patent Convention
shall be considered, for the purposes of subsequent
proceedings, as the European search report

**Application Number**

EP 02 42 5479

| | **CLASSIFICATION OF THE APPLICATION (Int.Cl.7)** |
|---|---|
| The Search Division considers that the present application, does not comply with the provisions of the EPC to such an extent that it is not possible to carry out a meaningful search into the state of the art on the basis of all claims | G06F17/60 |

Reason:

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 25 October 2002 | Dubois, G |